# EUROPEAN PATENT APPLICATION

(11) **EP 4 813 513 A1**
(43) Date of publication of application: **30.09.2026**
(21) Application number: 26167259.6
(22) Date of filing: 24.03.2026
(51) Int. Cl.: B01J 23/83, C01B 32/40, C10K 3/02

(54) **PROCESS FOR PREPARING A CATALYST FOR THE PRODUCTION OF SYNGAS BY THE REVERSE WATER-GAS SHIFT REACTION**

(30) Priority: 25.03.2025 IT 202500006102
(71) Applicant: Co2Co S.r.l., 65022 Bussi sul Tirino PE (IT)
(72) Inventor: MILANESE, Marco, 73010 Arnesano LE (IT); RIZZO, Alessio, 73057 Monteroni Di Lecce LE (IT); DE RISI, Arturo, 73100 Lecce LE (IT)
(74) Representative: Santoro, Sofia

(57) **Abstract**

The present invention relates to a catalyst comprising stainless steel elements, to the process for preparing said catalyst and to the catalyst obtainable by said process. In particular, the catalyst is generated on the surface of stainless steel elements through a thermochemical process at 850°C, by interaction with cerium oxide nanoparticles (ceria, CeO₂) under a flow of CO₂, capable of modifying the surface elemental chemical composition and the specific surface area, thereby maximising the catalytic conversion performance and selectivity of the RWGS (Reverse Water Gas Shift) reaction. The present invention also encompasses various reactor configurations based on the use of said catalyst, as well as their related applications.

## Description

### FIELD OF THE INVENTION

The present invention relates to the field of catalysts, and more particularly to a process for preparing a catalyst useful in the production of syngas (or synthesis gas), to the catalyst thus obtained and to its uses.

### STATE OF THE ART

Syngas is a gas mixture consisting essentially of hydrogen and carbon monoxide, and is considered one of the most important intermediates in the production of a wide range of molecules of high industrial value, such as methanol, ethylene and propylene, and in energy production. Furthermore, the hydrogen contained in syngas is a source of 'clean' fuel, from which energy can be produced without polluting emissions.

To date, syngas is mainly produced by methane *reforming* or by the partial oxidation of fossil fuels, but other processes have also been developed to produce it from CO₂ and hydrogen using thermal energy. Among these processes, one possible way to convert CO₂ into CO is the well-known reverse water gas shift (RWGS, reaction 1) reaction, although it is not yet practised on an industrial scale due to economic and supply chain considerations that must be identified and overcome in order to utilise this reaction as a carbon source (Schwab E. et al. Chem. Ing. Tech, 87 (2015) 347.).

CO₂(g) + H_{2g} ↔ CO_{g} + H₂O₁ ΔH° = + 41.3 kJ/mol (1)

The kinetics of the RWGS reaction have been studied extensively in the past (see, for example, Graven W.M. et al. J Am Chem Soc, 76 (1954) 2602-2607 or Karim G.A. et al. J Inst Fuel, 47 (1974) 219). Despite the strong reducing power of H₂ , the chemical equilibrium of reaction 1 is inhibited by the inertness of _{CO₂} and its stability. In fact, the RWGS would not occur unless driven by an efficient catalyst (see Porosoff M.D. et al. Energy Environ. Sci., 9 (2016) 62). It has been demonstrated that noble metal-based catalysts (see Juneau M. et al. Energy Environ. Sci. 13 (2020) 2524), typically supported on metal oxides, are capable of catalysing this reaction with good levels of performance and selectivity (see Sá S. et al. Applied Catalysis B: Environmental, 99 (2010) 43-57 or Minyukova T.P. et al. Int J of Hydr Eng, 48 (2023) 22462-22483 or Da Silva I.A. et al. Front Energy Res, 7 (2019) 593-610 or Yao C.Z. et al. Appl. Cat. A, 297 (2006) 151-158). However, such catalysts are very expensive, making them unsuitable for industrial-scale applications.

Bustamante et al. (AIChE J, 50 (2004) 1028-1041) compared a small quartz reactor with one made of steel (Inconel^{™} 600). They observed an increase in reaction rate with the use of Inconel^{™} 600 compared to quartz, attributed to a catalytic effect of the wall material. However, this important study focused on the kinetic theory of the RWGSR and did not explore the issue of the catalytic power of steels in depth.

US Patent Application No. US2024/383749A1 describes chemical systems and methods for the production of synthesis gas (syngas) based on pyrolysis gas. In particular, with regard to embodiments in which the temperature in the RWGS reactor exceeds 800 °C, the inventors state that a nickel-based catalyst is required, such as that used in steam reforming of methane. In an alternative embodiment, the tubes themselves are made of a nickel superalloy (e.g. Inconel, Hastelloy, Waspaloy, Incoloy) which catalyses the RWGS reaction. Thus, in this latter respect, this document confirms the findings of Bustamante et al. (AIChE J, 50 (2004) 1028-1041).

Patent application US2022/348461A1 describes processes for the production of syngas based on the reaction of at least a portion of carbon dioxide with hydrogen within a reactor to produce carbon monoxide, water, unreacted carbon dioxide and unreacted hydrogen. The inventors state that to achieve a low-temperature RWGS reaction (e.g. reactions at temperatures below approximately 800 °C), the reactor components may be constructed from stainless steel or other metals or alloys capable of withstanding temperatures up to approximately 800 °C. On the other hand, when high-temperature RWGS reactions are desired (e.g. reactions above approximately 800 °C), the reactor components may be constructed from high-quality metals or alloys, such as nickel alloys, capable of withstanding temperatures up to approximately 1200 °C. The last two sentences refer to purely structural aspects of the reactor.

Patent application WO2015/069840A1 describes methods for the production of syngas. The inventors have discovered that the conversion process can take place in a metal reactor in such a way that the CO conversion reaction is in physical contact with the metal in the reactor. In other words, the reactor lacks a lining, such as a quartz or glass lining, which would otherwise prevent or reduce the CO₂ conversion reaction. The metal reactor may comprise from 0.1 to 20% by weight of nickel, preferably from 1 to 15% by weight, more preferably from 5 to 10% by weight. The metal may be stainless steel (SS), for example SS 316 or SS 304. The type of reactor may be, for example, a continuous fixed-bed reactor.

Patent US8551434B1 describes a method for producing a syngas mixture by introducing carbon dioxide and hydrogen into a reactor containing a CATOFIN^{®} Cr/Al2O3 catalyst. The catalyst comes into contact with the gaseous feed mixture to form reaction products of the syngas mixture. The reaction takes place in the presence of materials containing nickel and/or iron. The gaseous feed mixture is introduced into the reactor at an inlet temperature of between 700 °C and 800 °C, with the reaction being carried out under substantially adiabatic conditions or in which the reaction products of the syngas mixture are removed from the reactor at a reactor outlet temperature of between 500 °C and 600 °C.

It is clear from the state of the art that stainless steels have only limited catalytic activity for the RWGS reaction. Indeed, despite its low cost, it is not commercially used as a catalyst.

Therefore, there is still a strong need for a low-cost catalyst which, when placed in a suitable reactor, overcomes the disadvantages described above for known catalytic systems, reducing process temperatures and increasing conversion efficiency in the production of syngas from H₂ and CO₂.

### SUMMARY OF THE INVENTION

Following extensive experimentation, the Applicant has developed a catalyst comprising stainless steel elements and the corresponding preparation process.

More specifically, the Applicant has developed a new steel-based catalyst obtained through a thermochemical process, which, by varying the composition of the steel's surface layer, significantly increases its catalytic activity and selectivity in the RWGS reaction. In this way, it is possible to obtain a catalyst characterised by excellent performance and low costs.

Advantageously, the preparation process includes an activation step which renders the surface of said catalyst catalytically active in the RWGS reaction.

Therefore, the present invention relates to a catalyst comprising stainless steel or stainless steel elements whose surface is activated by heating to 850°C in the presence of cerium oxide (ceria, CeO₂) and a flow of CO₂.

In other words, the present invention relates to a catalyst obtained or obtainable through a high-temperature thermochemical process in which the surface layer (up to 1 micron thick) of stainless steel or stainless steel elements is catalytically activated by interaction with cerium oxide nanoparticles (ceria, CeO₂) at 850°C under a flow of CO₂.

In the context of the present invention, 'cerium powder' or 'cerium nanoparticles' refers to particles comprising or consisting of cerium oxide, having an equivalent average diameter (D50) of between 10 nm and 3500 nm, where the D50 value is determined by laser diffraction particle size analysis.

Advantageously, said catalyst may be in the form of a tube or comprise a tubular element. As will be immediately apparent to a person skilled in the art, "tube" refers to a conduit or hollow element, generally of cylindrical cross-section, having variable length and diameter.

The invention also relates to a process for the preparation of such a catalyst comprising the following steps:
i) Fill a stainless steel tube with cerium oxide nanoparticles (CeO₂);
ii) Heat the tube to a temperature of approximately 850°C, preferably using CO₂ flushing;
iii) Cool the tube to room temperature using CO₂ flushing;
iv) Remove the cerium oxide from the tube.

Advantageously, step i) of filling a stainless steel tube with cerium nanoparticles may also comprise pressing and vibrating the cerium oxide nanoparticles onto the inner surface of the steel tube to ensure close contact between the nanoparticles and the steel's surface.

In order to stabilise the catalyst, and in particular its performance over time, the process may advantageously also comprise the following steps:
vi) Heating the tube to a temperature of approximately 450°C with CO₂ and H₂ flow, preferably for approximately 1 hour;
vii) Maintain the temperature of 450°C for a minimum of 1 hour with CO₂ and H₂ flow, preferably at a minimum pressure of 2 barA;
viii) Cool the tube to room temperature with _{CO₂} flow.

The catalyst activation process comprising steps i) to viii) may be repeated several times in order to improve the catalyst's performance.

The present invention also relates to a catalyst comprising stainless steel obtainable by the process according to any of the embodiments described herein. The catalyst comprising stainless steel obtainable by the process of the invention advantageously has a surface layer that is catalytically active in the RWGS reaction. As will be evident from the detailed description, the activation process of the invention allows the elemental composition of the steel surface to be profoundly modified, increasing its specific surface area and rendering it catalytically active in the RWGS reaction. The catalyst that is the subject of the present invention, and more specifically the surface layer of the stainless steel subjected to the catalytic activation treatment, has an elemental composition (measurements obtained using SEM-EDX) in accordance with the following Table.

| **Element Symbol** | **Element Name** | **Atomic Concentration [%]** | |
|---|---|---|---|
| | | **Min** | **Max** |
| Cr | Chromium | 0 | 3 |
| Ni | Nickel | 0 | 1 |
| Mn | Manganese | 0 | 2 |
| C | Carbon | 5 | 10 |
| Si | Silicon | 0 | 1 |
| Ce | Cerium | 13 | 18 |
| O | Oxygen | 30 | 55 |
| Other elements | | In | trace amounts |

Accordingly, the subject-matter of the present invention is the catalyst in any of the embodiments described herein, the corresponding activation process, reactors comprising this catalyst, and their use in the production of syngas from H₂ and CO₂, the essential features of which are defined in the respective independent claims.

Furthermore, the catalyst in any of the embodiments described has also proved suitable in numerous industrial processes - e.g. the production of a wide range of fundamental chemicals such as methanol, methane and other hydrocarbons depending on the proportions of H₂ and CO (see e.g. Kirsch H. et al. Chem Eng Sci, 227 (2020) 115930 or Gao R. et al. J CO2 Util, 51 (2021) 101619) - as well as in the steel industry for the production of directly reduced iron (or DRI), in particular as a reducing agent in the conversion of CO₂ to CO, thereby enabling the reduction of climate-changing emissions in a *'hard-to-abate'* sector.

Further important characteristics of the catalyst, the reactor containing it and their applications are defined in the dependent claims attached hereto.

### BRIEF DESCRIPTION OF THE FIGURES

The characteristics and advantages of the catalyst, the related production process, the reactor containing it and their uses according to the invention will become clearer from the following description, relating to their preferred embodiments, and provided by way of example and not limitation with reference to the attached drawings. In particular:

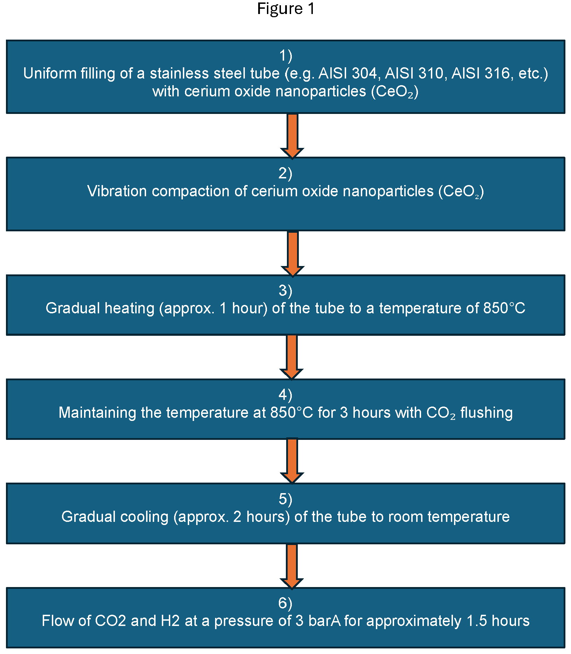

- Figure 1 schematically shows the catalyst production process, according to an embodiment of the invention with a total duration of approximately 7.5 hours.
- Figure 2 schematically shows a longitudinal sectional view of an embodiment of the reactor (consisting of a single tube) of the invention, useful for the conversion of CO₂ and H₂ into syngas by means of the RWGS reaction catalysed by the catalyst of the invention.
- Figure 3 schematically shows a longitudinal sectional view of an embodiment of the (fixed-bed) reactor of the invention, in which the catalyst located inside the tube consists of stainless steel chips/powder that have previously undergone an activation process.
- Figure 4 schematically shows an isometric view of a multi-tube reactor, in which each tube operates according to the scheme shown in Figure 2 or Figure 3.
- Figure 5 schematically shows a linear parabolic solar radiation concentration system, which can be used to supply energy to the RWGS reaction.

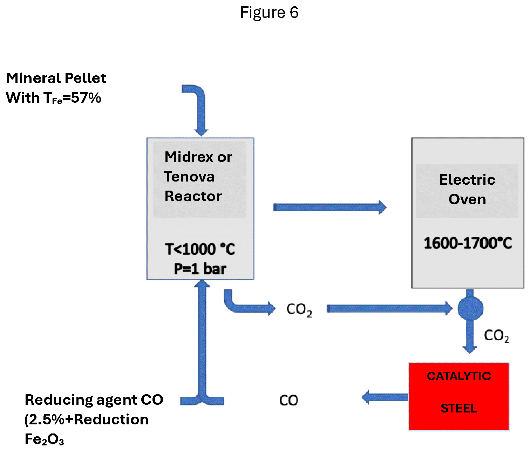

- Figure 6 schematically shows a possible application of the catalyst of the present invention in the steel industry. In particular, the figure shows how the catalyst can be used as a reducing agent to convert CO₂ derived from the DRI (Direct Reduced Iron) process into CO, for reuse in the same process.
- Figure 7 compares images obtained by scanning electron microscopy (SEM) of the surface of steel activated according to the process of the invention and that of non-activated or untreated steel (a: untreated steel @ 5000x; b: untreated steel @ 10000x; c: activated steel @ 5000x; d: activated steel @ 10000x).
- Figure 8 is a schematic representation of the experimental setup used to characterise the conversion efficiency of the catalyst and reactor of the invention in the RGWS reaction (Schematic of the system where V, valve; F, flow meter; T, thermocouple; TCP, temperature control programme; GC, gas chromatograph).
- Figure 9 presents a tabular comparison of the performance of catalysts described in the scientific literature and the catalyst of the present invention (activated). Figure 9 also shows a summary of the reaction conditions with conversion and selectivity for the RWGSR catalysts (Excerpt from: Chen X, Chen Y, Song C, Ji P, Wang N, Wang W and Cui L (2020). Recent Advances in Supported Metal Catalysts and Oxide Catalysts for the Reverse Water-Gas Shift Reaction, Frontiers in Chemistry. Front. Chem. 8:709. doi:10.3389/fchem.2020.00709).
- Figure 10 shows a graph comparing the catalytic conversion performance of CO₂ to CO obtained using a virgin stainless steel tube (not subjected to the catalytic activation process of the invention) and a tube activated according to the process of the invention.

### DETAILED DESCRIPTION OF THE INVENTION

As mentioned above, the inventors have developed a catalyst and the corresponding production process. The catalyst comprises stainless steel elements (tubes, bars, chips, powder, etc.) whose surface has been suitably treated, via the process described in more detail below, in order to modify their elemental composition and specific surface area.

Accordingly, the present invention relates to a catalyst comprising stainless steel or comprising stainless steel elements, wherein the surface of said stainless steel is activated by heating to 850°C in the presence of cerium oxide nanoparticles (CeO₂) and under a flow of CO₂. Or, in other words, by bringing the surface of said stainless steel into contact with cerium oxide nanoparticles CeO₂ at a temperature of 850°C, under a flow of _{CO₂}.

In the context of the present invention, the term 'surface' refers to a surface layer of the steel having a maximum thickness of approximately 1 micron.

Preferably, the catalyst comprises a pre-activated stainless steel tube, optionally filled with pre-activated stainless steel powder and/or chips.

In the context of the present invention, the term *"stainless* steel" preferably refers to steel selected from the group consisting of AISI 304, AISI 310, AISI 316 and mixtures thereof.

As mentioned, advantageously, the activation process described herein allows the surface of the stainless steel to be activated, thereby maximising its catalytic activity and selectivity.

The present invention therefore also relates to a process for the preparation of a catalyst comprising stainless steel, wherein said process comprises the following steps:
i) Filling a tube comprising stainless steel with cerium oxide (CeO₂) powder or nanoparticles;
ii) Heating the tube to a temperature of approximately 850°C, preferably with CO₂ flushing;
iii) Maintaining the temperature at approximately 850°C with CO₂ flushing preferably for approximately 3 hours;
iv) Cool the tube to room temperature using _{CO₂} purging;
v) Remove the cerium oxide from the tube.

In order to stabilise the catalyst, the process may advantageously also comprise the following additional steps:
vi) Heat the tube to a temperature of approximately 450°C with CO₂ and H₂ purging, preferably for approximately 1 hour;
vii) Maintain the temperature of 450°C for a minimum of 1 hour with CO₂ and H₂ flow, preferably at a minimum pressure of 2 barA;
viii) Cool the tube to room temperature with _{CO₂} flow.

The catalyst activation process, comprising steps i) to viii) - that is, from the stage of filling the stainless steel tube with ceria nanoparticles to the final stage of cooling the tube to room temperature whilst flushing with _{CO₂}- can be repeated several times in order to improve the catalyst's performance.

Stage i) of filling the stainless steel tube with ceria nanoparticles is such as to ensure contact between the steel surface and the ceria. Stage i) may, for example, also comprise the sub-stage of pressing and/or vibrating the ceria nanoparticles so as to ensure close contact between the nanoparticles and the steel surface.

The term 'approximately' in the context of the present invention means that the value may have its exact meaning but also values falling within the range around the given value. For example, in the case of a temperature value (e.g. approximately 450°C), 'approximately' indicates that temperatures within a range of plus or minus 100°C, preferably 20°C, are also suitable (e.g. 350-550°C).

The activation process allows the stainless steel elements to be catalytically activated, rendering them catalytically active for the RWGS reaction, whether they are the tube itself, a surface thereof, or additional elements such as steel powder and/or steel shavings.

The stainless steel may be of a type commonly known to a person skilled in the art. Preferably, the stainless steel is selected from the group consisting of: AISI 304, AISI 310, AISI 316 and mixtures thereof.

According to a preferred embodiment, the process for activating the stainless steel comprises the following steps:
1. Filling a stainless steel tube (e.g. AISI 304, AISI 310, AISI 316, etc.) with cerium oxide nanoparticles (CeO₂) so as to bring the cerium nanoparticles into contact with the steel, for example by vibrating the cerium oxide nanoparticles.
2. Gradual heating (approx. 1 hour) of the tube to a temperature of 850°C with _{CO₂} flushing.
3. Maintaining the temperature at 850°C for approximately 3 hours with _{CO₂} flushing.
4. Gradual cooling (approx. 2 hours) of the tube to room temperature with _{CO₂} flushing.
5. Removal of the ceria from the tube.

In order to stabilise the catalyst, the process may advantageously also comprise the following additional steps:
6. Heating of the tube to a temperature of approximately 450°C with CO₂ and H₂ flushing, preferably for approximately 1 hour;
7. Maintaining the temperature at 450°C for a minimum of 1 hour with CO₂ and H₂ flushing, preferably at a minimum pressure of 2 barA;
8. Cooling of the tube to ambient temperature with CO₂ flushing.

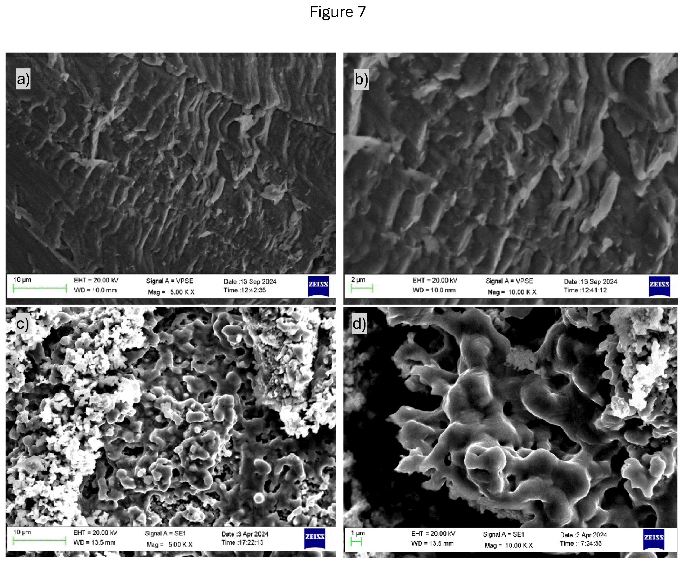

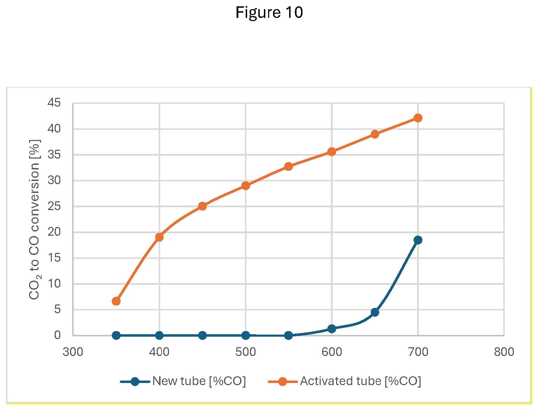

The process, as carried out in any of the embodiments described here, makes it possible to modify the surface elemental composition, surface morphology and surface area of the treated metal component, rendering it catalytically active with significantly higher CO₂-to-CO conversion performance than that of an untreated steel tube (see also Example 5 and Figure 10). Figure 7 shows a comparison between the surface of activated steel and that of non-activated steel.

The SEM images reveal that the non-activated steel has a normal grain structure (Figure 7a and Figure 7b), whilst the structure of the activated steel appears completely different (Figure 7c and Figure 7d), showing a larger surface area and the dissolution of the grains.

In order to characterise the new catalyst-namely, the surface layer of the activated steel-from a chemical perspective, analyses were carried out using the SEM-EDX technique. The most significant results are reported below.

| **Symbol Element** | **Element Name** | **Atomic Concentration [%]** | |
|---|---|---|---|
| | | **Min** | **Max** |
| Cr | Chromium | 0 | 3 |
| Ni | Nickel | 0 | 1 |
| Mn | Manganese | 0 | 2 |
| C | Carbon | 5 | 10 |
| Si | Silicon | 0 | 1 |
| Ce | Cerium | 13 | 18 |
| O | Oxygen | 30 | 55 |
| Other elements | | In trace amounts | |

The present invention also relates to a catalyst comprising stainless steel, obtainable by the process according to any of the preceding claims, preferably having the following elements in its elemental composition (expressed as atomic concentration): Chromium (0%-3%), Nickel (0%-1%), Manganese (0%-2%), Carbon (5%-10%), Silicon (0%-1%), Cerium (13%-18%), Oxygen (30%-55%) as measured by SEM-EDX analysis.

In order to evaluate the catalytic activity of the invention, tests were carried out on the conversion of CO₂to CO in a tubular reactor according to an embodiment of the invention, both before and after activation of its internal surface (see Example 5, Figure 7 and Figure 10).

Furthermore, in order to fully evaluate the performance of the new catalyst, the experimental results were compared with the thermodynamic limits of _{CO₂} conversion to CO. Based on the thermodynamics of the RWGS reaction, the equilibrium constant K for Reaction (1) at different temperatures can be easily calculated using the Van't Hoff equation; however, the results obtained become increasingly inaccurate as the temperature rises, since the ΔH° of the reaction is always considered under standard conditions at 298.15 K. More accurate values of the equilibrium constant as a function of temperature can be obtained using the following equation (Moe JM, Chem. Eng. Progress, 58, 3, 1962, 33). ${K}_{eq \left(RWGSR\right)} = \frac{1}{Keq \left(WGSR\right)} = \frac{1}{e \left(\frac{4577 , 8}{T}-4,33\right)}$

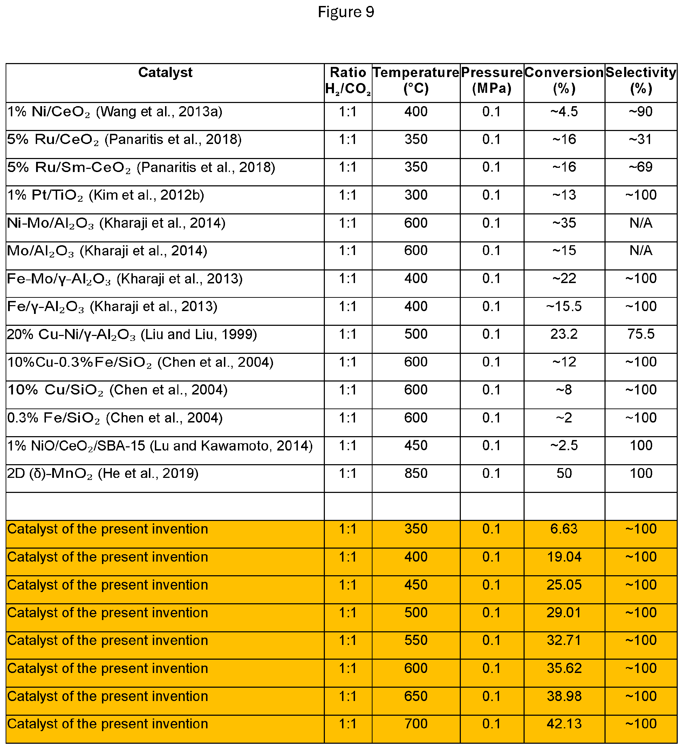

Based on Equation 2, the following table shows a comparison between the average experimental values obtained with the present invention and the theoretical values for the conversion of _{CO₂}to CO. Furthermore, Figure 9 shows a comparison between the performance of the catalysts described in the scientific literature and that of the catalyst of the present invention.

| **T (°C)** | **P (MPa)** | **%COₜₕ** | **%COₑₓₚ** | **%COₑₓₚ/ COₜₕ** |
|---|---|---|---|---|
| 350 | 0.105 | 18.12 | 6.63 | 36.59% |
| 400 | 0.105 | 22.53 | 19.04 | 84.51% |
| 450 | 0.105 | 26.89 | 25.05 | 93.16% |
| 500 | 0.105 | 31.10 | 29.01 | 93.28% |
| 550 | 0.105 | 35.08 | 32.71 | 93.24% |
| 600 | 0.105 | 38.78 | 35.62 | 91.85% |

| | | | | |
|---|---|---|---|---|
| T: temperature; P: pressure; %COₜₕ : theoretical index (i.e. maximum achievable according to thermodynamics) of CO₂ conversion to CO via the RWGS reaction; %COₑₓₚ : experimentally measured conversion rate of CO₂ to CO via the RWGS reaction; %COₑₓₚ /COₜₕ : ratio between the experimental and theoretical conversion rates of CO₂ to CO via the RWGS reaction. | | | | |

For temperatures above 450 °C, the results show CO₂ conversion values close (>90%) to the thermodynamic limit of the RWGS reaction.

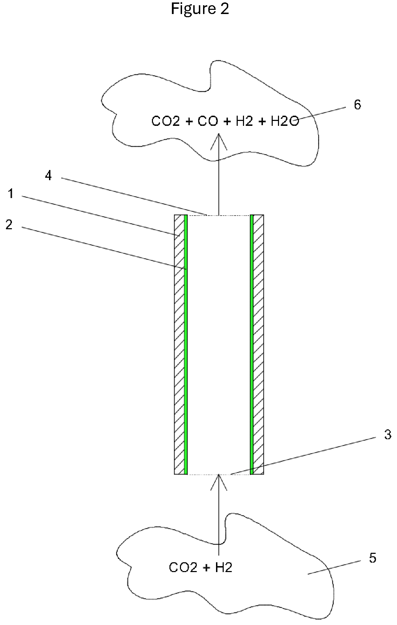

The inventors of this invention have developed a reactor, an exemplary embodiment of which is illustrated in Figure 2 attached hereto. With reference to Figure 2, the present reactor comprises a heated stainless steel tube 1, the inner surface of which has been pre-activated according to the process of the invention to create a catalyst layer 2, having an inlet 3 for the flow of gases 5, consisting mainly of CO₂ and H₂, as well as variable quantities of other gases, originating, for example, from a combustion plant, an oxy-combustion plant or another source, and an outlet 4 for the flow of gases 6, consisting mainly of CO, CO₂, H₂ and H₂O, as well as variable quantities of other gases that pass through the reactor without participating in the RWGS reaction.

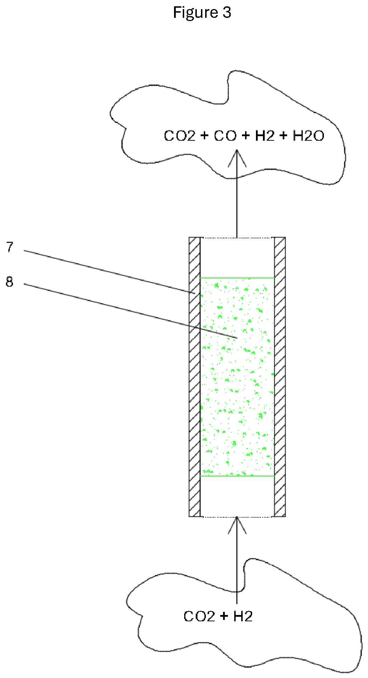

The inventors of this invention have developed a second type of reactor, an exemplary embodiment of which is illustrated in Figure 3 attached hereto. With reference to Figure 3, the reactor comprises a heated tube 7 made of stainless steel or another material, inside which are placed stainless steel chips and/or powder 8, suitably treated according to the activation process described herein in order to render their surface catalytically active with respect to the WGSR reaction. In this case too, the tube is equipped with an inlet and an outlet for the flow of the gases to be treated.

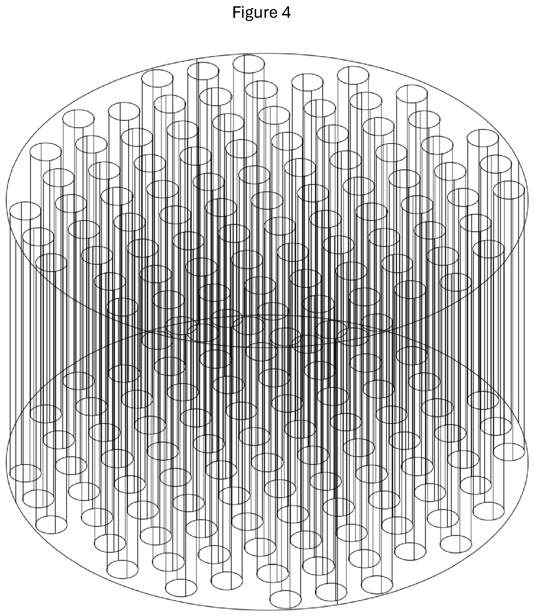

In one aspect of this invention, illustrated in Figure 4, the reactor is constructed in a multi-tube configuration in order to increase the treatable gas flow rate.

In one aspect of this invention, the reactor, constructed according to the schematics of Figure 2, Figure 3 or Figure 4, may be fed directly with gases preheated to the desired reaction temperatures.

Therefore, the present invention also relates to a reactor for the conversion of CO₂ into syngas comprising the catalyst in any of the embodiments described herein. More specifically, the reactor may comprise:
- a reaction tube (1), the inner surface (2) of which has been previously activated by the process of the invention, and means for heating it, said tube (1) comprising:
- an inlet (3), optionally fitted with a flow distributor capable of distributing a gaseous flow (F) comprising CO₂ and H₂ uniformly throughout the cross-section of said tube;
- an outlet (4) for the syngas S formed.

The reactor may comprise a multi-tube system (9) consisting of several reaction tubes (1), preferably juxtaposed or arranged side by side.

These heating means may, for example, be selected from electric heating elements, burners, heat exchangers/recuperators, solar concentrators and may be associated with the reactor body in various ways, for example, heating elements, electric furnaces of various kinds, combustion-fuelled gas heaters, heat recuperators from industrial processes, etc.

In a preferred embodiment, said heating means also comprise a parabolic solar radiation concentration system.

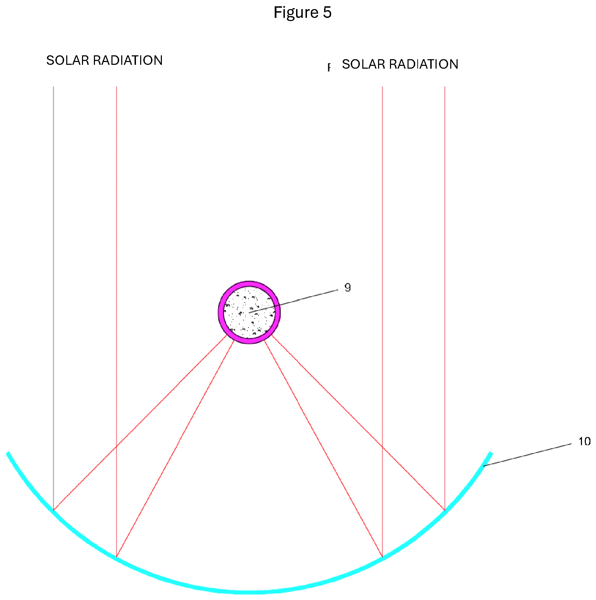

In this case, the reactor is powered by a parabolic solar radiation concentration system, capable of heating reactor tube 1 and enabling the catalytic reaction for the production of syngas. One embodiment of this system, illustrated in Figure 5 attached hereto, comprises an optical body 9 for reflecting solar radiation, which is an energy-transmitting concentrating mirror capable of heating reactor tube 1, positioned at the focal point of the mirror.

Therefore, in addition to the advantages already mentioned relating to the characteristics of the catalyst compared to catalysts known in the prior art, this invention also has the advantage of being able to utilise the clean energy of solar radiation to power the catalysed reaction for the production of syngas. This aspect, combined with the possibility of using H₂ produced from a renewable source and CO₂ from combustion plants as feed gas, makes the present invention particularly valuable from the point of view of environmental sustainability. Obviously, the invention therefore also relates to the use of the catalyst or reactor in any of the embodiments described herein, for the conversion of CO₂ into syngas.

As mentioned, the catalyst of the invention can also be used in the steel industry, particularly in direct reduced iron (DRI) production processes, specifically to catalyse the conversion of CO₂ into CO, preferably where the CO is then reused in the same DRI process as a reducing agent in place of hydrogen. This allows the operating pressure of the Midrex or Teneva reactors, commonly used and generally known to a person skilled in the art, to be significantly reduced from 8 barA (according to current technology based on the use of hydrogen as a reducing agent) to 1 barA (using CO as a reducing agent). Therefore, the present invention also relates to the use of the catalyst in any embodiment of the invention or of the reactor in any embodiment of the invention in the preparation of directly reduced iron (or DRI), preferably to catalyse the conversion from CO₂ to CO, more preferably where CO is then reused as a reducing agent in said DRI preparation process.

In the context of the present invention, the notation Bar A denotes absolute Bar and is distinguished from Bar G relative to atmospheric pressure.

The following examples are provided for illustrative purposes and are not intended to limit the scope of the present invention. Obvious alternatives to the embodiments described and/or illustrated herein are deemed to fall within the scope of protection defined by the appended claims.

### EXAMPLES

### Example 1: Preparation of the catalyst comprising a stainless steel tube

The preparation of the catalyst was carried out through the following stages:
1) A steel tube, specifically made of AISI 310 (Di = 9mm, De = 12mm, L = 15cm), was filled with cerium oxide nanoparticles (ceria, CeO₂). The nanoparticles were compacted and vibrated to ensure close contact between the nanoparticles and the steel surface.
2) Subsequently, a flow of _{CO₂} was initiated through the ceria-filled tube at a rate of 50 smL/min at a pressure of 1 barA. This flow was maintained at a constant rate through the tube for a duration of 6 hours, i.e. for the subsequent stages 3, 4 and 5 of the activation process.
3) The tube was then heated gradually (over a period of about 1 hour) until it reached a temperature of 850°C.
4) The tube was maintained at a temperature of 850°C for a further 3 hours or so.
5) The tube was allowed to cool gradually to room temperature over a period of approximately 2 hours.
6) Once the cooling phase was complete, the tube was emptied of ceria and reheated to a temperature of 450 °C over a period of approximately 1 hour under a flow of CO₂ and H₂, both at a volumetric flow rate of 150 smL/min and a pressure of 3 barA.
7) The tube was maintained at a temperature of 450 °C for approximately 1.5 hours. This final stage, together with stage 6, helps to stabilise the catalyst's performance.
8) Finally, the tube was gradually cooled back to room temperature over a period of approximately 2 hours.

### Example 2: Preparation of the catalyst comprising stainless steel powder/chips

This catalyst preparation procedure allows both the tube and the stainless steel powder/chips to be activated.

The catalyst preparation was carried out in the following stages:
1) Stainless steel powder/shavings, specifically AISI 310, were mixed with cerium oxide (CeO₂) nanoparticles and introduced into a steel tube, specifically AISI 310 (Di = 9 mm, De = 12 mm, L = 15 cm).
2) Subsequently, a flow of CO₂ at 50 smL/min and a pressure of 1 bar was initiated through the tube referred to in step 1. This flow was maintained at a constant rate through the tube for approximately 6 hours, i.e. for the subsequent steps 3, 4 and 5 of the activation process.
3) The tube was then gradually heated (over a period of approximately 1 hour) to a temperature of 850°C.
4) The tube was maintained at a temperature of 850°C for a further 3 hours.
5) The tube was allowed to cool gradually to room temperature over a period of approximately 2 hours.
6) Once the cooling phase was complete, the tube was emptied of the cerium and the stainless steel powder/chips.
7) The stainless steel powder/shavings were separated from the ceria and reintroduced into the tube .
8) The tube filled with the stainless steel powder/shavings (without ceria) was reheated to a temperature of 450 °C over a period of approximately 1 hour under a flow of _{CO₂} and _{H₂}, both at a volumetric flow rate of 150 smL/min and a pressure of 3 barA.
9) The tube was maintained at a temperature of 450 °C for approximately 1.5 hours. This final stage, together with the previous one, helps to stabilise the catalyst's performance.
10) Finally, the tube was gradually cooled back to room temperature over a period of approximately 2 hours.

### EXAMPLE 3: Chemical and physical characterisation of the catalyst

The catalyst was characterised using various analyses:
- morphological analysis (performed using a SEM-Zeiss Germany scanning electron microscope)
- X-ray diffraction (chemical composition, lattice parameters and particle sizes of the porous macrostructure, performed using a Rigaku Ultima ++)

### EXAMPLE 4: characterisation of the catalyst in terms of conversion efficiency in the RWGS reaction

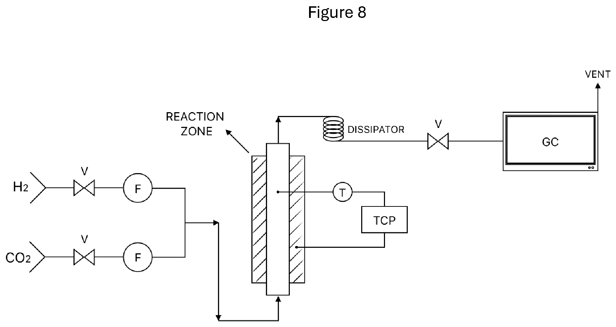

In order to characterise the catalyst in terms of conversion efficiency in the RWGS reaction, an experimental setup was developed, as shown in Figure 8. Tests were carried out to evaluate the reactor's conversion capacity. In addition, the outlet gas mixture was analysed using a gas chromatograph.

The flow rates of the feed gases, H₂ and CO₂ (both grade 4.5), were controlled using stainless steel needle valves and monitored with Omega FMA-1600 series flowmeters. These gases were premixed and fed into the reactor as an equimolar mixture. The reaction pressure was controlled using a second stainless steel needle valve fitted downstream of the reactor.

The reactor consisted of a stainless steel tube, previously activated according to the method of the invention, 330 mm in length, with an internal diameter of 10 mm and an external diameter of 12 mm, with a control circuit based on a type K (T) thermocouple mounted coaxially and positioned approximately at the centre of the reactor.

The reactor was insulated all around with rock wool to reduce heat loss and prevent large temperature fluctuations that would have caused uncertainty in the reading of the results.

The water produced in the RWGS reaction was removed using a trap, after which the reactor effluent was analysed using an Agilent Technologies 7820A gas chromatograph fitted with a TCD detector. Helium (grade 5.5) was used as the carrier gas. The GC column, HP Molesieve (fused silica), enabled the separation and quantification of CO and CO₂ within the concentration range of interest. Finally, the control system was programmed in LabVIEW (National Instruments). The reaction performance was evaluated based on _{CO₂} conversion, the _{CO/CO₂} ratio and residence time.

Compared to state-of-the-art catalysts, there is no need to use particularly expensive noble metals, nor is it necessary to deposit the catalytic material onto a support, as the steel itself acts as the support material.

The invention therefore makes it possible to obtain an economical catalyst with improved performance.

The present invention has been described above with reference to a preferred embodiment. It is to be understood that other embodiments may exist which fall within the same inventive concept, as defined by the scope of protection of the claims set out below.

### EXAMPLE 5: Comparison between untreated stainless steel and stainless steel treated according to the process of the invention.

The stainless steel of the reactor in Example 4 prior to the activation treatment had the following elemental chemical composition (measurements obtained using SEM-EDX):

| **Symbol Element** | **Element Name** | **Atomic Concentration [%]** | |
|---|---|---|---|
| | | **Min** | **Max** |
| Cr | Chromium | 15 | 26 |
| Ni | Nickel | 9 | 22 |
| Mn | Manganese | 0 | 2 |
| C | Carbon | 0 | 0.1 |
| Si | Silicon | 0 | 1 |
| Other elements | | In trace amounts | |

After undergoing the activation process described in the invention, the surface layer of the stainless steel subjected to the catalytic activation treatment, exhibited an elemental chemical composition in accordance with the following table (measurements obtained using SEM-EDX):

| **Element Symbol** | **Element Name** | **Atomic Concentration [%]** | |
|---|---|---|---|
| | | **Min** | **Max** |
| Cr | Chromium | 0 | 3 |
| Ni | Nickel | 0 | 1 |
| Mn | Manganese | 0 | 2 |
| C | Carbon | 5 | 10 |
| Si | Silicon | 0 | 1 |
| Ce | Cerium | 13 | 18 |
| O | Oxygen | 30 | 55 |
| Other elements | | Trace amounts | |

A comparison of the two tables clearly shows the profound chemical transformation undergone by the surface layer of the steel as a result of the thermochemical process of the invention.

The thermochemical process of activating the steel surface, in addition to altering its elemental chemical composition, also causes a profound morphological change to the surface, with a very significant increase in the specific surface area. In this regard, please refer to the images shown in Fig. 7, obtained using scanning electron microscopy (SEM). Here too, the profound morphological transformation undergone by the steel surface is evident.

Finally, Fig. 10 shows a comparison of the catalytic conversion performance between a stainless steel tube not subjected to the catalytic activation process and an activated tube. All data shown in Fig. 10 were obtained by carrying out measurements using an Agilent Technologies 7820A gas chromatograph, equipped with a TCD detector. Each value was obtained by repeating each measurement 10 times and averaging the measured values.

The data clearly show that stainless steel not activated according to the process of the invention acts as a catalyst in the RWGS reaction only at temperatures above 550 °C, but the conversion performance, compared with that of the activated steel, is significantly lower.

## Claims

1. A process for preparing a catalyst comprising stainless steel, wherein the process comprises the following steps:
i) Filling a tube having an inner surface comprising stainless steel with cerium oxide CeO₂ nanoparticles so as to ensure contact between the stainless steel and the cerium nanoparticles;
ii) Heating the tube to a temperature of approximately 850°C, preferably with CO₂ flushing;
iii) Maintaining the temperature at approximately 850°C with CO₂ flushing, preferably for approximately 3 hours;
iv) Cool the tube to room temperature using CO₂ flushing.

2. A process according to the preceding claim, further comprising the following steps:
v) removing cerium oxide from the tube;
vi) Heating the tube to a temperature of approximately 450°C with CO₂ and H₂ flushing, preferably for approximately 1 hour;
vii) Maintaining the temperature of 450°C for at least 1 hour with CO₂ and H₂ flushing, preferably at a minimum pressure of 2 barA;
viii) Cool the tube to room temperature using CO₂.

3. The process according to claims 1 or 2, wherein the process, in particular steps i) to viii), is repeated several times.

4. The process according to claims 1-3, wherein, in step i), the tube is further filled with stainless steel powder and/or chips mixed with said cerium oxide nanoparticles, and wherein step vi) is followed by the following steps
- Empty the tube of the cerium oxide and the stainless steel powder/chips/pieces.
- Separating the cerium oxide from the stainless steel powder/shavings/pieces.
- Refill the tube with the stainless steel powder/shavings/pieces (without the ceria).

5. A process according to any of the preceding claims, wherein said stainless steel is selected from the group consisting of: AISI 304, AISI 310, AISI 316 and mixtures thereof.

6. A catalyst comprising stainless steel obtainable by the process according to any of claims 1-5, preferably wherein the surface layer of said stainless steel has the following elements in its elemental composition, expressed as atomic concentration: Chromium (0%-3%), Nickel (0%-1%), Manganese (0%-2%), Carbon (5%-10%), Silicon (0%-1%), Cerium (13%-18%), Oxygen (30%-55%) as measured by SEM-EDX analysis.

7. A reactor for the conversion of CO₂ into syngas comprising the catalyst according to claim 6.

8. A reactor according to claim 7, comprising:
a reaction tube (1), the inner surface (2) of which is pre-activated by the process referred to in claims 1-5, and means for heating it, said tube (1) comprising:
- an inlet (3) optionally fitted with a flow distributor designed to distribute a gaseous flow (F) comprising CO₂ and H₂ uniformly throughout the cross-section of said tube;
- an outlet (4) for the syngas (S) formed.

9. A reactor according to claim 7 or 8, comprising a multi-tube system (9) consisting of several reaction tubes (1).

10. A reactor according to any one of claims 7-9, wherein said heating means comprises a linear parabolic trough solar radiation system.

11. Use of the catalyst according to claim 6 or the reactor according to claims 7-10 for the conversion of CO₂ into syngas.

12. Use of the catalyst according to claim 6 or the reactor according to claims 7-10 in the preparation of directly reduced iron (or DRI), to catalyse the conversion of CO₂ to CO, optionally for reuse as a reducing agent in said DRI preparation process.
